# EUROPÄISCHE PATENTANMELDUNG

(11) **EP 4 755 766 A1**
(43) Veröffentlichungstag der Anmeldung: **10.06.2026**
(21) Anmeldenummer: 25205207.1
(22) Anmeldetag: 29.09.2025
(51) Int. Cl.: B62D 33/067, B62D 33/06

(54) **SCHWENKLAGERUNG EINER FAHRERKABINE EINER PISTENRAUPE SOWIE LAGERBUCHSE HIERFÜR UND PISTENRAUPE**

(30) Priorität: 04.12.2024 DE 102024136000
(71) Anmelder: Kässbohrer Geländefahrzeug AG, 88471 Laupheim (DE)
(72) Erfinder: Mayer, Benedikt, 89233 Neu-Ulm (DE); Cornely, Timo, 88437 Maselheim (DE)
(74) Vertreter: Patentanwälte Ruff, Wilhelm, Beier, Dauster & Partner mbB

(57) **Zusammenfassung**

1. Schwenklagerung, Lagerbuchse für eine solche Schwenklagerung und Pistenraupe mit einer derartigen Schwenklagerung.

2.1 Eine Schwenklagerung einer Fahrerkabine einer Pistenraupe, mit einer fahrgestellseitigen Trägerachse, sowie mit einer fahrerkabinenseitigen Lagerstütze, die relativ zu der Trägerachse drehbar gelagert ist mittels einer Lagerbuchse, wobei die Lagerbuchse einen in betriebsfertig montiertem Zustand drehbar auf der Trägerachse gelagerten Innenring sowie einen mit der Lagerstütze verbundenen, zum Innenring radial versetzten Außenring und wenigstens zwei den Innenring mit dem Außenring radial verbindende und in Umfangsrichtung zueinander beabstandete Stützstege aufweist, wobei der Innenring, die Stützstege und der Außenring durch ein einstückiges Elastomer-Formteil gebildet sind, und wobei zwischen den Stützstegen in Umfangsrichtung oberhalb des Innenrings wenigstens eine erste Aussparung sowie unterhalb des Innenrings eine zweite Aussparung vorgesehen sind, an denen der Innenring und der Außenring radial voneinander getrennt sind, ist bekannt.

2.2 Erfindungsgemäß erstreckt die zweite Aussparung sich unterhalb des Innenrings durchgängig über einen Umfangswinkel von zumindest weitgehend 180°.

2.3 Einsatz für Pistenraupen zur Bearbeitung von Schneegelände.

## Beschreibung

Die Erfindung betrifft eine Schwenklagerung einer Fahrerkabine einer Pistenraupe, mit einer fahrgestellseitigen Trägerachse, sowie mit einer fahrerkabinenseitigen Lagerstütze, die relativ zu der Trägerachse drehbar gelagert ist mittels einer Lagerbuchse, wobei die Lagerbuchse einen in betriebsfertig montiertem Zustand drehbar auf der Trägerachse gelagerten Innenring sowie einen mit der Lagerstütze verbundenen, zum Innenring radial versetzten Außenring und wenigstens zwei den Innenring mit dem Außenring radial verbindende und in Umfangsrichtung zueinander beabstandete Stützstege aufweist, wobei der Innenring, die Stützstege und der Außenring durch ein einstückiges Elastomer-Formteil gebildet sind, und wobei zwischen den Stützstegen in Umfangsrichtung oberhalb des Innenrings wenigstens eine erste Aussparung sowie unterhalb des Innenrings eine zweite Aussparung vorgesehen sind, an denen der Innenring und der Außenring radial voneinander getrennt sind.

Eine Pistenraupe der Marke PistenBully PB 829 ist durch die Anmelderin allgemein bekannt. Die bekannte Pistenraupe weist ein Fahrgestell auf, das ein Kettenlaufwerk trägt. In normaler Fahrtrichtung gesehen frontseitig auf dem Fahrgestell ist eine Fahrerkabine montiert, die für eine Zugänglichkeit zu einer unterhalb der Fahrerkabine in dem Fahrgestell montierten Antriebseinheit um eine an einem unteren Frontbereich der Fahrerkabine angeordnete Schwenkachse nach vorne schwenkbar gelagert ist. Die Schwenkachse erstreckt sich in Fahrzeugquerrichtung. Die Schwenklagerung weist eine an einem Querträger des Fahrgestells angeordnete Trägerachse sowie Lagerstützen an einer Tragstruktur der Fahrerkabine auf, die mittels jeweils einer Lagerbuchse relativ zur Trägerachse drehbar gelagert sind. Die jeweilige Lagerbuchse zwischen der Lagerstütze der Fahrerkabine und der Trägerachse des Fahrgestells dient zudem als Stoßdämpfung für die Fahrerkabine. Die Lagerbuchse im Bereich jeder Lagerstütze ist als Elastomer-Formteil ausgebildet, wobei die Lagerbuchse einen Innenring sowie einen zum Innenring radial versetzten Außenring aufweist, so dass eine Mittellängsachse des Außenrings radial versetzt ist zu einer Mittellängsachse des Innenrings. Der Innenring und der Außenring sind mithilfe von zwei Stützstegen einstückig miteinander verbunden, die in betriebsfertig montiertem Zustand der jeweiligen Lagerbuchse in Fahrzeuglängsrichtung etwa horizontal gegenüberliegend zueinander ausgerichtet sind. Beide Stützstege sind spiegelsymmetrisch zu einer Mittelebene, im Übrigen identisch zueinander ausgeführt, wobei die Mittelebene in betriebsfertig montiertem Zustand aufgespannt ist durch eine Fahrzeugquerachse und eine Fahrzeughochachse. Beide Stützstege erstrecken sich gegenüberliegend zueinander jeweils über einen Umfangswinkelbereich von etwa 60°.

Aufgabe der Erfindung ist es, eine Schwenklagerung, eine Lagerbuchse und eine Pistenraupe der eingangs genannten Art zu schaffen, die im Fahrbetrieb einen gleichbleibenden Komfort für einen Fahrer in der Fahrerkabine gewährleisten.

Diese Aufgabe wird für die Schwenklagerung dadurch gelöst, dass die zweite Aussparung unterhalb des Innenrings sich durchgängig über einen Umfangswinkel von wenigstens 180° erstreckt. Dadurch wird die in Umfangsrichtung gesehene Breite der Stützstege reduziert, wodurch im Betrieb der Pistenraupe an der jeweiligen Lagerbuchse beziehungsweise an dem jeweiligen Elastomer-Formteil Bereiche hoher Zugdehnungen eliminiert werden. Die erfindungsgemäße Lösung verhindert eine Überlastung der Schwenklagerung der Fahrerkabine. Dadurch ergibt sich auch über einen längeren Zeitraum im Fahrbetrieb eine gleichbleibende elastische Stoßdämpfung für die Fahrerkabine, die auch auf längere Sicht einen gleichbleibenden Komfort für einen Fahrer der Pistenraupe gewährleistet. Ein frühzeitiges Setzen der Lagerbuchse durch eine Überlastung wird zuverlässig verhindert. Erfindungsgemäß werden die beiden Stützstege nahezu ausschließlich Druck- und Schubbelastungen ausgesetzt, nicht jedoch Zugspannungen, die das Elastomermaterial des Elastomer-Formteils besonders beanspruchen. Durch die erfindungsgemäße Lösung ergeben sich zwischen Innenring und Außenring große Freiwege, um bei mittleren Stoßbelastungen einen weichen Kennlinienverlauf zu ermöglichen. Unter dem betriebsfertig montierten Zustand der Lagerbuchse ist der Zustand zu verstehen, in dem die Fahrerkabine der Pistenraupe mittels ihrer beiden Lagerstützen unter Zwischenfügung der beiden Lagerbuchsen auf der fahrgestellseitigen Trägerachse abgestützt ist. Dies ist der Zustand, in dem die Fahrerkabine fahrbereit auf dem Fahrgestell der Pistenraupe montiert ist.

**In** Ausgestaltung der Erfindung ist die erste Aussparung oberhalb des Innenrings mit einem am Außenring angeformten, radial nach innen ragenden Anschlagbereich versehen, der sich in Umfangsrichtung über wenigstens eine Hälfte einer Umfangserstreckung der ersten Aussparung erstreckt. Dadurch weist dieser Anschlagbereich des Elastomer-Formteils zwangsläufig eine erhöhte Steifigkeit auf, die eine grundsätzlich reduzierte Steifigkeit aufgrund des großen Umfangswinkels der zweiten Aussparung zumindest teilweise ausgleicht. Vorteilhaft ist der Anschlagbereich symmetrisch mittig zu der ersten Aussparung angeordnet. Dadurch ist der Anschlagbereich in betriebsfertig montiertem Zustand der Lagerbuchse in Fahrzeughochrichtung oberhalb des Innenrings positioniert.

**In** weiterer Ausgestaltung der Erfindung ist der Anschlagbereich als sich radial nach innen verjüngender Verbindungssteg ausgeführt, der einstückig in den Innenring übergeht unter Trennung der ersten Aussparung in zwei zueinander in Umfangsrichtung beabstandete Aussparungsabschnitte. Die erste Aussparung bildet demzufolge zwei in Umfangsrichtung zueinander beabstandete Augen. Auch diese Ausgestaltung kompensiert die durch die Erfindung zunächst reduzierte Grundsteifigkeit des Elastomer-Formteils.

**In** weiterer Ausgestaltung der Erfindung sind die Aussparungsabschnitte identisch zueinander dimensioniert und weisen - in axialer Ansicht - einen runden Querschnitt mit zumindest weitgehend gleichbleibendem Durchmesser auf. Die Aussparungsabschnitte bilden demzufolge in axialer Ansicht zwei runde Augen.

**In** weiterer Ausgestaltung der Erfindung läuft die zweite Aussparung zu gegenüberliegenden Umfangsseiten hin kontinuierlich verjüngt als schmaler Schlitz aus. Dadurch wird der entsprechende Bereich der Lagerbuchse bei Belastung der Schwenklagerung in Vorzugsrichtung gestaucht, das heißt, das Elastomer-Formteil wird nahezu ausschließlich durch Druckspannungen belastet, die weniger schädlich für das Elastomer-Formteil sind als Zugspannungen. Vorteilhaft läuft die zweite Aussparung zu gegenüberliegenden Umfangsseiten hin kontinuierlich verjüngt als schmaler Schlitz aus. Diese Ausgestaltung unterstützt die Eliminierung von Zugspannungen im Betrieb der Schwenklagerung der Fahrerkabine.

**In** weiterer Ausgestaltung der Erfindung ist eine radial außen liegende Randkontur der zweiten Aussparung in gleichmäßigem Abstand zu einem Außenrand des Außenrings erstreckt, und eine radial innen liegende Randkontur der zweiten Aussparung erstreckt sich ausgehend von einem unteren Scheitelpunkt der Randkontur derart kreisbogenförmig in beiden Umfangsrichtungen zu gegenüberliegenden Endbereichen der zweiten Aussparung, dass die innen liegende Randkontur und die außen liegende Randkontur nahezu tangential an den Endbereichen ineinander münden. Diese Ausgestaltung trägt weiter dazu bei, Zugspannungen in dem Elastomer-Formteil im Fahrbetrieb der Pistenraupe zu vermeiden. Die nahezu tangentiale Mündung der beiden Randkonturen an den Endbereichen ineinander führt zu einem spitzen Zulaufen der zweiten Aussparung an diesen gegenüberliegenden Endbereichen.

In weiterer Ausgestaltung der Erfindung weist der Anschlagbereich eine andere Shore-Härte auf als ein übriger Bereich des Elastomer-Formteils. Vorteilhaft weist der Anschlagbereich eine höhere Shore-Härte auf als der übrige Bereich des Elastomer-Formteils. Dadurch wird die aufgrund der relativ großen ersten Aussparung vorhandene Steifigkeitsreduzierung zumindest teilweise ausgeglichen.

In weiterer Ausgestaltung der Erfindung weisen an den Anschlagbereich auf gegenüberliegenden Umfangsseiten anschließende Übergangsabschnitte eine sowohl von der Shore-Härte des Anschlagbereichs als auch von der Shore-Härte des übrigen Bereichs des Elastomer-Formteils abweichende Shore-Härte auf. Vorzugsweise sind die Übergangsabschnitte mit einer gegenüber dem Anschlagbereich reduzierten Shore-Härte, aber mit einer gegenüber dem übrigen Bereich des Elastomer-Formteils höheren Shore-Härte versehen.

In weiterer Ausgestaltung der Erfindung sind die Stützstege mit unterschiedlicher Shore-Härte relativ zu einem übrigen Bereich des Elastomer-Formteils ausgebildet. Dabei können die gegenüberliegenden Stützstege entweder die gleiche Shore-Härte oder aber ebenfalls unterschiedliche Shore-Härten relativ zueinander aufweisen, so dass der eine Stützsteg eine höhere Steifigkeit aufweist als der andere Stützsteg. Diese Ausgestaltung kann vorteilhaft sein, um bei Bergab- oder Bergauffahrten der Pistenraupe eine weitgehend gleichmäßige Einfederung des Elastomer-Formteils zu ermöglichen.

In weiterer Ausgestaltung der Erfindung ist der Innenring an seinem Innenumfang mit einer metallischen Ringhülse ausgekleidet. Die Ringhülse ist fest in dem Innenring gehalten und kann ausschließlich aus Metall, vorzugsweise aus Stahl, oder als Kombination aus Metall und Polyoxymethylen (POM) hergestellt sein. Die Ringhülse unterstützt die Gleitlagerfunktion des Innenrings.

In weiterer Ausgestaltung der Erfindung ist der Außenring an seinem Außenumfang von einer metallischen Ringhülse umschlossen. Die metallische Ringhülse bildet eine Trägeraufnahme für die fahrerkabinenseitige Lagerstütze. Die Ringhülse am Außenumfang des Außenrings ist an gegenüberliegenden Stirnseiten - in betriebsfertig montiertem Zustand in Fahrzeugquerrichtung - mit jeweils einem radial abragenden Ringkragen versehen, die für die Ringhülse und für die die Ringhülse umschließende Lagerstütze in Fahrzeugquerrichtung Axialanschläge bilden. Die Lagerstütze wird auf der Ringhülse fixiert, insbesondere durch Verschraubung von zwei Halbschalen der Lagerstütze, die den Umfang der Ringhülse umgreifen.

Für die Lagerbuchse wird die der Erfindung zugrunde liegende Aufgabe durch die Merkmale des Anspruchs 13 gelöst. Die Lagerbuchse ist ein einstückiges Elastomer-Formteil, das die zuvor beschriebenen Merkmale und Funktionen sowie Vorteile bereitstellt. Das Elastomer-Formteil ist aus einem PU-Elastomer oder aus Naturkautschuk hergestellt. Ein PU-Elastomer ist spanend bearbeitbar, so dass auch eine nachträgliche Bearbeitung ermöglicht ist. Die Verwendung von Naturkautschuk ist eine vorteilhafte und nachhaltige Alternative zur Verwendung eines PU-Elastomers.

Für die Pistenraupe wird die der Erfindung zugrunde liegende Aufgabe durch die Merkmale des Anspruchs 14 gelöst. Für einen Fahrer der Pistenraupe ergibt sich durch die erfindungsgemäße Lösung im Fahrbetrieb in der Fahrerkabine ein wesentlich erhöhter Sitzkomfort, da starke Stoß- oder Vibrationsbelastungen nicht direkt auf das Innere der Fahrerkabine durchschlagen. Eine Überlastung der Schwenklagerung der Fahrerkabine wird vermieden.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt in einer Seitenansicht eine Ausführungsform einer erfindungsgemäßen Pistenraupe,
- Fig. 2: in vergrößerter Frontansicht die Pistenraupe nach Fig. 1 unter Weglassung eines frontseitigen Räumschilds,
- Fig. 3: in perspektivischer Darstellung einen frontseitigen Ausschnitt der Pistenraupe nach den Fig. 1 und 2 im Bereich einer Ausführungsform einer erfindungsgemäßen Schwenklagerung einer Fahrerkabine relativ zu einem Fahrgestell der Pistenraupe,
- Fig. 4: in vergrößerter Seitenansicht eine Schwenklagerung gemäß Fig. 3,
- Fig. 5: in einer Frontansicht eine erste Ausführungsform einer erfindungsgemäßen Lagerbuchse für die Schwenklagerung nach Fig. 4, und
- Fig. 6: in einer Frontansicht eine weitere Ausführungsform einer erfindungsgemäßen Lagerbuchse, die für die Schwenklagerung nach Fig. 4 anstelle der Lagerbuchse gemäß Fig. 5 einsetzbar ist.

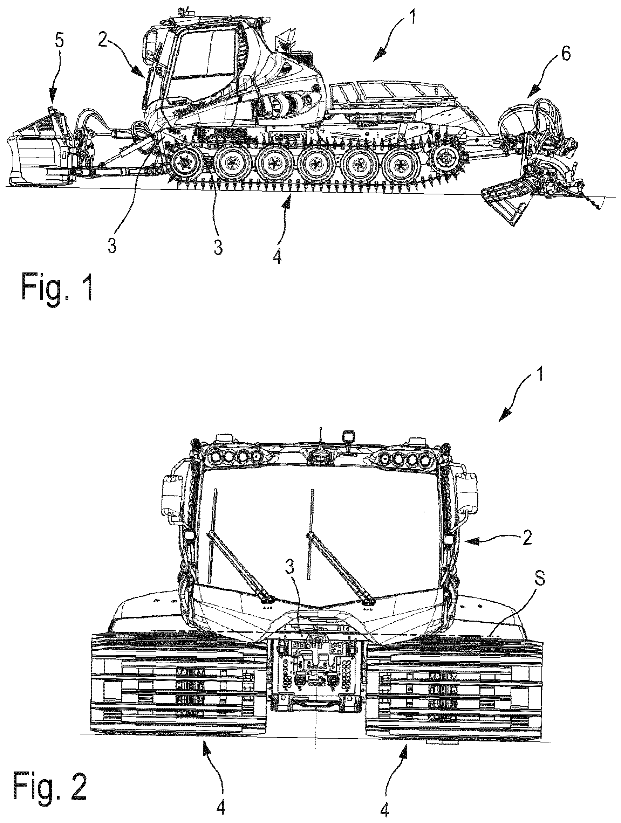

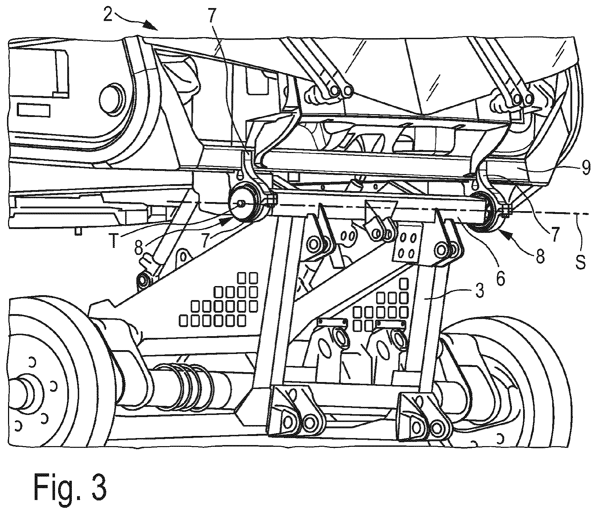

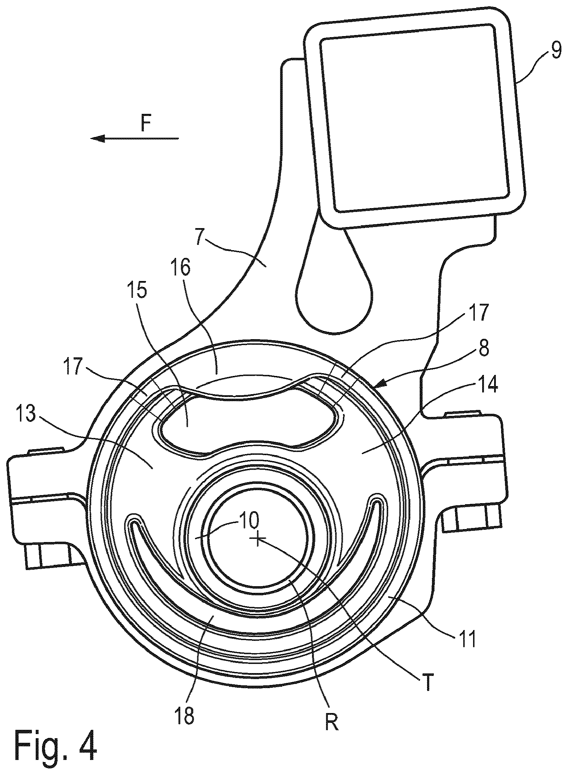

Eine Pistenraupe 1 nach den Fig. 1 bis 3 weist ein Fahrgestell 3 auf, das ein Kettenlaufwerk 4 trägt. Das Kettenlaufwerk 4 ist auf gegenüberliegenden Seiten des Fahrgestells 3 mit jeweils einer umlaufenden Fahrkette sowie mit mehreren Laufrädern sowie einem heckseitigen Turasrad und einem frontseitigen Spannrad versehen. Frontseitig ist an dem Fahrgestell 3 ein Räumschild 5 angebaut. Heckseitig ist am Fahrgestell 3 ein nicht näher bezeichneter Heckträger vorgesehen, der eine Heckfräse 6 trägt. In einer vorderen Hälfte einer Oberseite des Fahrgestells 3 ist auf dem Fahrgestell 3 eine Fahrerkabine 2 positioniert. Die Fahrerkabine 2 ist relativ zu dem Fahrgestell 3 nach vorne abkippbar, um einen Zugang zu unterhalb der Fahrerkabine 2 befindlichen Antriebskomponenten zu ermöglichen. Hierzu ist die Fahrerkabine 2 an ihrer Frontseite mittels einer Schwenklagerung relativ zum Fahrgestell 3 um eine in Fahrzeugquerrichtung erstreckte Schwenkachse S schwenkbeweglich gelagert. Eine Verschwenkung der Fahrerkabine 2 erfolgt durch nicht näher bezeichnete Hydraulikzylinder. Anhand der Fig. 3 ist erkennbar, dass die Fahrerkabine 2 frontseitig eine Tragstruktur mit einem aus Stahl bestehenden Querträger 9 aufweist, an dem in Fahrzeugquerrichtung zueinander beabstandet zwei Lagerstützen 7 befestigt sind. Die Lagerstützen 7 sind vorzugsweise mit dem Querträger 9 der Tragstruktur der Fahrerkabine 2 verschweißt. Die Lagerstützen 7 ragen schräg nach vorne und nach unten ab und bilden jeweils zwei Lagerschalen, die eine zylindrische Trägeraufnahme einer Lagerbuchse 8 umgrenzen, die nachfolgend näher beschrieben ist. Die beiden Lagerschalen sind mithilfe von Schraubverbindungen miteinander verbunden. Die beiden Lagerschalen jeder Lagerstütze 7 umgreifen jeweils eine nachfolgend anhand der Fig. 4 bis 6 näher beschriebene Lagerbuchse 8, 8a und sind mithilfe der Schraubverbindungen drehfest auf der Trägeraufnahme der Lagerbuchse 8, 8a fixiert.

Die jeweilige Lagerbuchse 8 lagert die aus Metall, vorzugsweise aus Stahl, bestehende Lagerstütze 7 der Fahrerkabine 2 jeweils auf einer Trägerachse T, die sich koaxial zur Schwenkachse S am Fahrgestell 3 erstreckt. Dabei ist die Trägerachse ortsfest in einem Querträger des Fahrgestells 3 befestigt, der an einem nach oben kragenden frontseitigen Fortsatz des Fahrgestells 3 vorgesehen ist. Die Trägerachse T wird in nicht näher dargestellter Weise gebildet durch zwei Achsfortsätze, die auf gegenüberliegenden Stirnseiten des Querträgers 6 des Fahrgestells 3 von dem Querträger 6 aus in Fahrzeugquerrichtung nach außen abragen. Die Trägerachse T ist zylindrisch ausgeführt.

Auf den jeweiligen Achsfortsatz der Trägerachse T an den gegenüberliegenden Stirnseiten des Querträgers 6 des Fahrgestells 3 ist jeweils eine Lagerbuchse 8 in Fahrzeugquerrichtung aufgesteckt, die an ihrem Außenumfang von den jeweils zwei Lagerschalen der Lagerstütze 7 umgriffen ist. Die Lagerbuchse 8 ist als einstückiges Elastomer-Formteil ausgeführt. Das Elastomer-Formteil ist entweder aus PU oder aus Naturkautschuk hergestellt. Die Lagerbuchse 8 weist einen Innenring 10 auf, der mit einem zylindrischen Innenumfang versehen ist. Der Innenring 10 ist ausgekleidet durch eine Ringhülse R, die zylindrisch ausgeführt ist und entweder als reine Metallhülse oder als POM-Kunststoffhülse gestaltet ist, die durch eine eingebettete Metallhülse verstärkt ist. Die Ringhülse R des Innenrings 10 gleitet in betriebsfertig montiertem Zustand der Lagerbuchse 8 drehbeweglich auf der Trägerachse T.

Radial versetzt - auf die Schwenkachse S der Schwenklagerung bezogen - ist der Innenring 10 der Lagerbuchse 8 umgeben von einem Außenring 11, der - wie auch der Innenring 10 - ebenfalls zylindrisch ausgeführt ist und eine Rotationsachse definiert, die in unbelasteter Ausgangslage der Lagerbuchse 8, wie sie anhand der Fig. 4 bis 6 dargestellt ist, in Hochrichtung axial parallel versetzt ist zu der Schwenkachse S und damit zu einer Rotationsachse des Innenrings 10. Der Innenring 10 und der Außenring 11 sind einstückig miteinander verbunden durch zwei Stützstege 13 und 14, nämlich einen - auf dem betriebsfertig montierten Zustand der Lagerbuchse 8 bezogen - in Fahrtrichtung der Pistenraupe schräg nach vorne und nach oben ragenden vorderen Stützsteg 13 und einen in relativ zur Fahrtrichtung der Pistenraupe schräg nach hinten und nach oben gerichteten hinteren Stützsteg 14. Der Innenring 10, der Außenring 11 und die beiden Stützstege 13 und 14 sind aus demselben Elastomermaterial hergestellt, vorliegend teilweise mit unterschiedlicher Shore-Härte, und werden einstückig in wenigstens einem Arbeitsgang zu dem Elastomer-Formteil geformt. Der Innenring 10 und der Außenring 11 sind lediglich über die beiden Stützstege 13 und 14, die relativ zu einer Vertikalen jeweils um etwa 45° nach vorne beziehungsweise nach hinten geneigt sind, relativ zueinander positioniert und miteinander verbunden. Sowohl der vordere Stützsteg 13 als auch der hintere Stützsteg 14 erstrecken sich zumindest weitgehend radial zur Schwenkachse S und damit zur Trägerachse T.

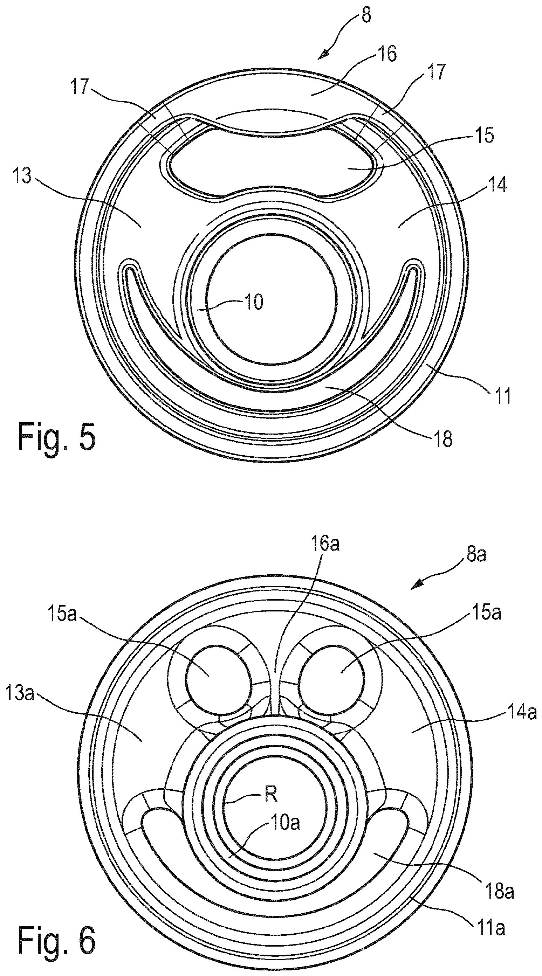

Zwischen den beiden Stützstegen 13 und 14 ist in einem oberen Abschnitt der Lagerbuchse 8 eine erste Aussparung 15 vorgesehen, die als zu beiden Axialrichtungen hin offene Tasche gestaltet ist. Zudem ist unterhalb der beiden Stützstege 13 und 14 und auch unterhalb des Innenrings 10 zwischen dem Innenring 10 und dem Außenring 11 eine weitere, zweite Aussparung 18 vorgesehen, die ebenfalls als zu gegenüberliegenden Axialseiten hin offene Tasche ausgebildet ist. Die zweite Aussparung 18 erstreckt sich sichelförmig um den Innenring 10 herum über einen Umfangswinkel von etwa 180° symmetrisch in gegenüberliegenden Umfangsrichtungen zu einer Vertikalen. Wie anhand der Fig. 4 und 5 gut erkennbar ist, weist die erste Aussparung 15 über einen Großteil ihrer Umfangserstreckung einen weitgehend gleichbleibenden freien Querschnitt auf, wohingegen die zweite Aussparung 18 zu den gegenüberliegenden Endbereichen hin und damit zu den Stützstegen 13, 14 hin schlitzförmig verjüngt ist. Eine radiale Breite des freien Querschnitts der ersten Aussparung 15 ist mehr als doppelt so breit wie eine radiale Breite des freien Querschnitts der zweiten Aussparung 18. Dabei erstreckt sich eine radial außen liegende Randkontur der zweiten Aussparung 18 über einen gesamten Umfang der Aussparung 18 in gleichmäßigem radialem Abstand zu einer Außenkontur des Außenrings 11, wohingegen eine radial innen liegende Randkontur der zweiten Aussparung 18 entlang eines Kreisbogens verläuft, der in den Eckbereichen zumindest weitgehend tangential in die radial außen liegende Randkontur der zweiten Aussparung 18 mündet.

Die erste Aussparung 15 erstreckt sich ebenfalls in Umfangsrichtung symmetrisch zu der Vertikalen um den Innenring 10 herum, wobei eine radial außen liegende Randkontur der ersten Aussparung 15 teilweise durch einen Anschlagbereich 16 gebildet wird, der über mehr als die Hälfte der Umfangserstreckung der ersten Aussparung 15 nockenförmig radial nach innen abragt.

Der Anschlagbereich 16 ist aus dem gleichen Elastomermaterial hergestellt wie der übrige Bereich des die Lagerbuchse 8 bildenden Elastomer-Formteils, jedoch mit höherer Shore-Härte als dieser übrige Bereich. Eine radial nach innen in den freien Querschnitt der Aussparung 15 hineinragende Randkontur des Anschlagbereichs 16 verläuft kreisbogenförmig, wobei ein Scheitelpunkt der Randkontur einem Scheitelpunkt einer radial inneren Randkontur der Aussparung 15 in Vertikalrichtung diametral gegenüberliegt. Gegenüberliegende Ränder des Anschlagbereichs 16 gehen in Übergangsabschnitte 17 des Elastomermaterials über, deren Shore-Härte gegenüber dem Anschlagbereich 16 reduziert, jedoch gegenüber dem übrigen Bereich des Elastomer-Formteils noch erhöht ist.

Die Lagerbuchse 8a nach Fig. 6 ist dazu vorgesehen, alternativ zu der Lagerbuchse 8 gemäß den Fig. 4 und 5 für die Lagerstütze 7 nach den Fig. 3 und 4 eingesetzt zu werden. Funktionsgleiche Teile oder Abschnitte der Lagerbuchse 8a sind mit gleichen Bezugszeichen versehen wie bei der Lagerbuchse 8, jedoch unter Hinzufügung eines Buchstabens a. Auch die Lagerbuchse 8a ist mit einem Innenring 10a und einem Außenring 11a versehen und insgesamt als einstückiges Elastomer-Formteil ausgeführt, wie dies auch bei der Lagerbuchse 8 der Fall ist. Der Innenring 10a ist auch mit einer Ringhülse R versehen, wie dies bei der Lagerbuchse 8 der Fall ist. Zur Vermeidung von Wiederholungen wird daher ergänzend auf die Ausführungen zur Lagerbuchse 8 verwiesen.

Nachfolgend wird auf die Unterschiede der Lagerbuchse 8a eingegangen.

Wesentlicher Unterschied bei der Lagerbuchse 8a ist es, dass als obere erste Aussparung zwei in Umfangsrichtung voneinander getrennte Aussparungsabschnitte 15a vorgesehen sind, zwischen denen sich ein Verbindungssteg 16a vom Außenring 11a zum Innenring 10a einstückig erstreckt. Die Aussparungsabschnitte 15a weisen einen runden freien Querschnitt auf, wobei beide Aussparungsabschnitte 15a spiegelsymmetrisch zu einer Vertikalen vorgesehen sind und den Verbindungssteg 16a auf gegenüberliegenden Umfangsseiten flankieren.

Eine zweite Aussparung 18a ist unterhalb des Innenrings 10a vorgesehen und erstreckt sich über einen Umfangswinkel von nahezu 180° relativ zu dem Innenring 10a und zumindest weitgehend koaxial zu dem Innenring 10a. Gegenüber der zweiten Aussparung 18 der Lagerbuchse 8 weist die zweite Aussparung 18a jedoch eine reduzierte Umfangserstreckung auf. Zudem laufen eine radial innen liegende Randkontur und eine radial außen liegende Randkontur der zweiten Aussparung 18a an ihren in Umfangsrichtung gegenüberliegenden Endbereichen nicht nahezu tangential ineinander, sondern münden in abgerundete Endbereiche, wobei ein innen liegender Randabschnitt jedes Endbereichs tangential aus dem Innenring 10a in Umfangsrichtung sowie radial nach außen wegführt. In den gegenüberliegenden Endbereichen der zweiten Aussparung 18a weist ein freier Querschnitt der zweiten Aussparung 18a eine größere radiale Breite auf als an einem unteren Scheitelpunkt des Innenrings 10a. Die Stützstege 13a und 14a erstrecken sich in Umfangsrichtung zwischen den Aussparungsabschnitten 15a und der zweiten Aussparung 18a.

## Patentansprüche

1. Schwenklagerung einer Fahrerkabine (2) einer Pistenraupe (1), mit einer fahrgestellseitigen Trägerachse (T), sowie mit einer fahrerkabinenseitigen Lagerstütze (7), die relativ zu der Trägerachse (T) drehbar gelagert ist mittels einer Lagerbuchse (8, 8a), wobei die Lagerbuchse (8, 8a) einen in betriebsfertig montiertem Zustand drehbar auf der Trägerachse (T) gelagerten Innenring (10, 10a) sowie einen mit der Lagerstütze (7, 7a) verbundenen, zum Innenring (10, 10a) radial versetzten Außenring (11, 11a) und wenigstens zwei den Innenring (10, 10a) mit dem Außenring (11, 11a) radial verbindende und in Umfangsrichtung zueinander beabstandete Stützstege (13, 14; 13a, 14a) aufweist, wobei der Innenring (10, 10a), die Stützstege (13, 14; 13a, 14a) und der Außenring (11, 11a) durch ein einstückiges Elastomer-Formteil gebildet sind, und wobei zwischen den Stützstegen (13, 14; 13a, 14a) in Umfangsrichtung oberhalb des Innenrings (10, 10a) wenigstens eine erste Aussparung (15, 15a) sowie unterhalb des Innenrings (10, 10a) eine zweite Aussparung (18, 18a) vorgesehen sind, an denen der Innenring (10, 10a) und der Außenring (11, 11a) radial voneinander getrennt sind, **dadurch gekennzeichnet, dass** die zweite Aussparung (18, 18a) unterhalb des Innenrings (10, 10a) sich durchgängig über einen Umfangswinkel von zumindest weitgehend 180° erstreckt.

2. Schwenklagerung nach Anspruch 1, **dadurch gekennzeichnet, dass** die erste Aussparung (15) oberhalb des Innenrings (10) mit einem am Außenring (11) angeformten, radial nach innen ragenden Anschlagbereich (16) versehen ist, der sich in Umfangsrichtung über wenigstens eine Hälfte einer Umfangserstreckung der ersten Aussparung (15) erstreckt.

3. Schwenklagerung nach Anspruch 2, **dadurch gekennzeichnet, dass** der Anschlagbereich (16) symmetrisch mittig zu der ersten Aussparung (15) angeordnet ist.

4. Schwenklagerung nach Anspruch 2 oder 3, **dadurch gekennzeichnet, dass** der Anschlagbereich als sich radial nach innen verjüngender Verbindungssteg (16a) ausgeführt ist, der einstückig in den Innenring (10a) übergeht unter Trennung der ersten Aussparung in zwei zueinander in Umfangsrichtung beabstandete Aussparungsabschnitte (15a).

5. Schwenklagerung nach Anspruch 4, **dadurch gekennzeichnet, dass** die Aussparungsabschnitte (15a) identisch zueinander dimensioniert sind und - in axialer Ansicht - einen runden Querschnitt mit zumindest weitgehend gleichbleibendem Durchmesser aufweisen.

6. Schwenklagerung nach einem der vorhergehenden Ansprüche, **dadurch gekennzeichnet, dass** die zweite Aussparung (18) zu gegenüberliegenden Umfangsseiten hin kontinuierlich verjüngt als schmaler Schlitz ausläuft.

7. Schwenklagerung nach Anspruch 6, **dadurch gekennzeichnet, dass** eine radial außen liegende Randkontur der zweiten Aussparung (18) über einen gesamten Umfang der zweiten Aussparung (18) in gleichmäßigem Abstand zu einem Außenrand des Außenrings (11) erstreckt ist, und dass eine radial innen liegende Randkontur der zweiten Aussparung sich ausgehend von einem unteren Scheitelpunkt der Randkontur derart kreisbogenförmig in beiden Umfangsrichtungen zu gegenüberliegenden Endbereichen der zweiten Aussparung (18) erstreckt, dass die innen liegende Randkontur und die außen liegende Randkontur nahezu tangential an den Endbereichen ineinander münden.

8. Schwenklagerung nach einem der vorhergehenden Ansprüche, **dadurch gekennzeichnet, dass** der Anschlagbereich (16) eine andere Shore-Härte aufweist als ein übriger Bereich des Elastomer-Formteils.

9. Schwenklagerung nach Anspruch 8, **dadurch gekennzeichnet, dass** an den Anschlagbereich (16) auf gegenüberliegenden Umfangsseiten anschließende Übergangsabschnitte (17) eine sowohl von der Shore-Härte des Anschlagbereichs (16) als auch von der Shore-Härte des übrigen Bereichs des Elastomer-Formteils abweichende Shore-Härte aufweisen.

10. Schwenklagerung nach einem der vorhergehenden Ansprüche, **dadurch gekennzeichnet, dass** die Stützstege (13, 14) mit unterschiedlicher Shore-Härte relativ zu einem übrigen Bereich des Elastomer-Formteils ausgebildet sind.

11. Schwenklagerung nach einem der vorhergehenden Ansprüche, **dadurch gekennzeichnet, dass** der Innenring (10) an seinem Innenumfang mit einer metallischen Ringhülse (R) ausgekleidet ist.

12. Schwenklagerung nach einem der vorhergehenden Ansprüche, **dadurch gekennzeichnet, dass** der Außenring (11) an seinem Außenumfang von einer metallischen Ringhülse umschlossen ist.

13. Lagerbuchse (8, 8a) für eine Schwenklagerung nach einem der vorhergehenden Ansprüche mit den die Lagerbuchse (8, 8a) betreffenden Merkmalen von einem der vorhergehenden Ansprüche.

14. Pistenraupe (1) mit einem Fahrgestell (3) und mit einer Fahrerkabine (2), die mittels einer Schwenklagerung nach einem der Ansprüche 1 bis 12 schwenkbeweglich an dem Fahrgestell (3) abgestützt ist.
